# EUROPEAN PATENT APPLICATION

(11) **EP 4 618 556 A1**
(43) Date of publication of application: **17.09.2025**
(21) Application number: 24163028.4
(22) Date of filing: 12.03.2024
(51) Int. Cl.: H04N 21/233, H04N 21/81

(54) **METHOD FOR BROADCASTING DATA**

(71) Applicant: European Braodcasting Union, 1218 Grand-Sacconex, Geneva (CH)
(72) Inventor: ARCIDIACONO, Antonio, Geneva (CH)
(74) Representative: Cabinet Camus Lebkiri

(57) **Abstract**

The present invention relates to a method for broadcasting data, the method being implemented at a transmitting device and comprising:
- extracting a set of objects from the data by using a content extraction method; and
- broadcasting the set of objects by using a broadcasting technique;

wherein the data comprises audio or video data associated with an audio or video content;
wherein the set of objects incompletely represents the audio or video content;
wherein the content extraction method comprises an Artificial Intelligence, Al, -based extraction algorithm.

## Description

### BACKGROUND OF THE INVENTION

The present invention relates to the field of wireless communication. More specifically, the invention relates to a method and a device for broadcasting data on a telecommunication network, for example a wireless telecommunication network.

In telecommunications, the term "broadcast" refers to the simultaneous transmission of data to the whole set of receivers of a communication network (or to the whole set of receivers of a subnetwork called broadcast domain). In broadcasting communication techniques, data packets are routed from one sender to all the endpoints of the communication network by using a broadcast address associated with said network. Such techniques enable to distribute information widely through a single sending.

Most current communications technologies, including satellite communications, digital terrestrial transmissions (e.g. DTT, DAB, DRM, etc.) and some cellular technologies, support broadcast transmissions. There are many standards for broadcasting transmissions. For example, standards as Digital Video Broadcasting - Satellite (DVB-S) standards, e.g. DVB-S, DVS-S2, DVB-S2X, DVB-NIP are used for digital audiovisual and data broadcasting. Standards as Digital Audio Broadcasting (DAB) standards, e.g. DAB+, or ETSI Satellite Digital Radio (ETSI SDR), or Digital Radio Mondiale (DRM) are used for digital radio and data broadcasting. 5G Broadcast standards are used for television, radio, data and emergency alerts.

Over the past decades, broadcast technologies have also been widely used to send alert messages to populations, in crisis or danger situations, such as natural disasters (floods, storms, fires, volcanic eruptions, etc.), biological, chemical or nuclear accidents (pollution, gas leak, nuclear disaster, etc.), health dangers (epidemic, food contamination, etc.), serious public safety events (terrorist attacks, etc.), etc. For example, in the United States of America, the Emergency Alert System (EAS) is a national warning system allowing relevant authorities to broadcast emergency alerts and warning messages to the public across multiple channels, including cable, satellite, or broadcast television, and both AM/FM and satellite radio. In France, FR-Alert is a broadcast alarm system based on cellular technology used to quickly alert and inform citizens of dangerous or crisis situations. This system was implemented according to the European legislation EU-Alert as defined by the European Electronic Communications Code (EECC) using cellular broadcast technology for the broadcast of emergency warning messages to the public.

However, when a large number of messages are broadcast over a cellular network, this causes a sudden increase in the number of requests to a network, and the network is not necessarily able to process all the requests at the same time. Such a phenomenon is called a "broadcast storm" and may result in network congestion. The risk then is that the messages do not reach their destination.

In addition, to receive the message, the recipient must be located in an area where the network operates. For example, as explained in a previous example, indoors network coverage may be poor, and individuals may not receive broadcast messages or data.

There is therefore a need for a system capable for the broadcasting of data of all types, in particular audio or video, with extensive coverage and/or deep indoor penetration.

### SUMMARY OF THE INVENTION

The invention relates to a method for broadcasting data representing multimedia (audio or video) content, in which a very limited volume of data is broadcast. To do this, the initial data is decomposed into a set of objects which only partially represents the initial content, but which makes it possible to generate, at the receiving device, content associated with the initial content. Depending on the targeted applications and the state of the network, the content generated can be a "simplified" version of the initial content, or content very similar to the initial content. The generated content may even be an "enhanced" version of the initial content from the point of view of the user's needs (for example, content generated in a language other than that of the initial content).

An aspect of the invention therefore relates to a method for broadcasting data, the method being implemented at a transmitting device and comprising:
- extracting a set of objects from the data by using a content extraction method; and
- broadcasting the set of objects by using a broadcasting technique;

wherein the data comprises audio or video data associated with an audio or video content;
wherein the set of objects incompletely represents the audio or video content;
wherein the content extraction method comprises an Artificial Intelligence, AI, -based extraction algorithm.

By "content extraction method", it is meant any method for analyzing data associated with audio or video content and extracting features associated to said content from this data. For example, such a method can extract textual content and/or descriptive data (such as a voiceprint) associated with voice content.

In the present invention, the content extraction method comprises an Al-based extraction algorithm. It is understood that the content extraction method may also use other algorithms than the AI-based extraction algorithm.

By "AI-based extraction algorithm", it is meant an algorithm using AI to extract features or descriptive data from original data.

By "the set of objects incompletely represents the audio or video content", it is meant that it is not possible to reconstruct the initial audio or video content only from the set of objects. Thus, the set of objects may represent, for example:
- only part of the initial content (for example, for audio content, the set of objects may only include data associated with text, but not with the voice which pronounces the text); or
- the complete original content, but in this case the reconstruction of the content requires using other data than the set of objects.

Therefore, the present invention makes it possible to broadcast content, by limiting the volume of data sent. This significantly increases the probability that a user receives the data (and therefore has access to the content), even when reception conditions are significantly degraded.

Indeed, when dimensioning the transmission parameters (establishing a so-called link budget) for a broadcast signal, the link budget may normally be dimensioned to ensure a minimum signal strength for the user the most distant or the most difficult to reach. In practice, reaching 100% of the population is not economically viable and therefore broadcast networks are dimensioned to serve a certain percentage of the population with a given probability. For example, terrestrial radio and TV networks are often designed for more than 98% of the population for the provision of public broadcasting services. The target coverage for commercial broadcasting services is usually lower. The higher the probability the more expensive the initial CAPEX and operational costs to reach end users.

In practice it is decided to reach a certain population over a given territory and the actual transmission parameters calculated accordingly. For example, it may be decided to define a radio broadcasting network based on the DAB+ transmission standard to statistically reach 99% of the population of an urban area only outdoor. This would result in a set of transmission parameters: modulation, coding, TX power, etc. resulting in, for example, 32 audio channels at 64 kbps. To reach indoor users depending upon the actual position it may be necessary to increase the transmission power and/or using a more robust modulation and coding scheme. The latter comes at the expense of the available bandwidth and therefore it may be necessary to reduce the number of channels.

According to an aspect of the invention, almost all the same parameters may be kept, and it is possible to operate in simulcast mode transmitting 30 audio channels at 64 kbps with a nominal modulation and coding while transmitting an encoded version (e.g. extracted by AI) of the same 30 channels at 800 bps with a much stronger modulation and coding protection, such that the receiver margins are increased by, for example, 15dB when compared to the nominal case. In this case the signal is receivable also in a deep indoor situation leveraging upon the substantially increased link margin.

The invention can be particularly interesting in case of catastrophic events (e.g. floods, earthquakes, heat waves, etc.) terrestrial cellular communication networks may go down and/or be unavailable. In these cases, it is important to be able to distribute content to the entire population. According to the present invention, using "simplified" content extracted by AI makes it possible to reach a wider population using only the broadcast network.

As detailed hereinafter, the invention can also increase accessibility (e.g. for impaired people with hearing problems) and facilitate multiple language broadcasting.

In one or more embodiments, the set of objects may exclusively comprise non-audio non-video objects.

By "non-audio non-video objects" it is meant objects that are not audio or video data packets derived from standard audio or video coding and transmission techniques (e.g. MPEG).

Of course, these objects can advantageously describe audio or video content. For example, objects may include text data associated with text in an audio track, data descriptive of a voice reading the text, data describing the "rhythm" of the text (including speed of the text, pauses, etc.). In the case of video content, the objects may also include data associated with an image stream and synchronization data to synchronize sound and image, etc.

Thus, in these embodiments, the multimedia content (audio or video) is only represented by non-multimedia data - and therefore by data of much smaller size than the multimedia data.

In one or more embodiments, the data may comprise audio data including speech data, the AI-based extraction algorithm may comprise an AI-based speech-to-text algorithm, and the set of objects may comprise at least one text object corresponding to a textual content associated with the speech data and obtained by applying said AI-based speech-to-text algorithm to the audio data.

By "textual content", it is meant the data relating to the text associated with the speech data (but not, for instance, to the voice saying the text). This text object(s) can be used, for example, to generate an audio content in which the initial text is read, possibly with the right rhythm, but not necessarily with the same voice as the initial content.

In these embodiments, the content extraction method may further comprise a voice processing algorithm, the set of objects may further comprise at least one voice characteristics object corresponding to voice characteristics associated with the speech data and obtained by applying the voice processing algorithm to the audio data.

By "voice characteristics", it is meant data relating to the voice reading the text. By combining text objects and voice characteristics objects, it is therefore possible to generate an audio content having certain degree of similarity with the original content.

This degree of similarity depends on the type of voice characteristics. For example, if the voice characteristics only comprises a gender (masculine or feminine) associated with the voice, the generated content may be very different from the original content. On the other hand, if the voice characteristics comprises a voiceprint, the generated content may be quite similar to the original content.

Also, the content extraction method may further comprise a voice processing algorithm, and the at least one voice characteristics object may comprise a voice identifier identifying a voice associated with the speech data.

In these embodiments, only the identifier of a voice is sent, not the whole set of voice descriptors, therefore drastically reducing the volume of the data sent.

In one or more embodiments, the audio data further comprises non-voice audio data, the content extraction method further comprises an audio processing algorithm, and the set of objects further comprises at least one audio characteristics object corresponding to audio characteristics associated with the non-voice audio data and obtained by applying the audio processing algorithm to the audio data.

This "non-voice audio data" may be for example a background sound, a music, etc.

In particular, the non-voice audio data may comprise background sound data, and the at least one audio characteristics object may comprise a background sound identifier.

In one or more embodiments, the data comprises image data, the content extraction method further comprises an image processing algorithm, and the set of objects further comprises at least one image characteristics object corresponding to image characteristics associated with the image data and obtained by applying the image processing algorithm to the data.

In particular, the image data may comprise at least one image of a subject, and the at least one image characteristics object may comprise an identifier of the subject.

In one or more embodiments, the method may further comprise:
- broadcasting the data simultaneously to the set of objects by using a multiplexing technique.

In these embodiments, the original data is also sent (in a classic way), in addition to the set of objects. This allows for example that receiving devices which are not configured to generate content from a set of objects also receive the information. This also allows, according to another example, to define two reception modes: one standard mode, when the user is in a nominal reception zone, and the "light" mode, when the user is not in a nominal reception area. In the standard mode, the receiving device can play the content based on the original data received. In the light mode, the receiving device can generate a content from the set of objects and play the generated content.

In particular, the method may further comprise, prior to the simultaneous broadcasting of the set of objects and the data:
- encoding the set of objects according to a first coding scheme;
- encoding the data according to a second coding scheme;

wherein the first coding scheme has a smaller coding rate than the second coding scheme;
wherein the simultaneous broadcasting of the set of objects and the data comprises: simultaneously broadcasting the set of objects encoded according to the first coding scheme and the data encoded according to the second coding scheme.

Therefore, the set of objects is transmitted with a degree of protection higher than the original data. Thus, the set of objects has a much greater chance of being received by user equipment (i.e. receiving device), even in degraded reception conditions.

Another aspect of the invention relates to a method for receiving data, the method being implemented at a receiving device comprising a memory storing reconstruction data, the method comprising:
- receiving a set of objects comprising non-audio non-video objects and incompletely representing an audio or video content;
- constructing the audio or video content from the set of objects and the stored reconstruction data; and
- playing the constructed multimedia content.

At the receiving side, the device generates (or "constructs") a content from the set of objects, by using reconstruction data locally stored. This allows less data to be transmitted than in a traditional transmission.

In one or more embodiments, the set of objects exclusively comprises non-audio non-video objects.

In one or more embodiments, the reconstruction data comprises data representative of at least one voice, non-voice audio data representative of at least one non-voice audio content, or image data representative of at least one image.

In one or more embodiments, the set of objects comprises at least one text object corresponding to a textual content, and the constructed audio or video content comprises a speech content corresponding to said textual content.

For example, reconstruction data may comprise a plurality of voice data, each voice data among the plurality of voice data corresponding to a respective voice and being associated with a voice identifier of said respective voice, and the set of objects may comprise a voice identifier. The method may further comprise:
- determining, among the plurality of voice data, voice data respectively associated with the received voice identifier;
- wherein the speech content corresponds to the textual content read by a voice corresponding to the determined voice data.

In one or more embodiments, the reconstruction data comprises a plurality of non-voice audio data corresponding to a respective plurality of background sounds, each background sound among the plurality of background sounds being associated with a respective background sound identifier, the set of objects comprises a background sound identifier, and the method further comprises:
- determining, among the plurality of background sounds, a background sound respectively associated with the received background sound identifier;
wherein the audio or video content comprises an audio content in which the textual content is read with the determined background sound.

In one or more embodiments, the reconstruction data comprises image data, each image data being associated with a respective image identifier, the set of objects comprises an image identifier, and the method further comprises:
- determining at least one image data respectively associated with the received image identifier;
wherein the audio or video content comprises a video content including:
- an audio content in which said textual content is read; and
- an image content constructed from the at least one image data determined.

In one or more embodiments, the image data comprises descriptive data representative of a plurality of subjects, the image identifier is a subject identifier identifying a subject among the plurality of subjects, and the image content comprises a sequence of images of the subject associated with the received subject identifier.

Yet another aspect of the invention relates to a transmitting device configured to implement a method for broadcasting data as presented above.

Yet another aspect of the invention relates to a receiving device configured to implement a method for receiving data as presented above.

Another aspect relates to a computer program product comprising a computer readable medium, having thereon a computer program comprising program instructions. The computer program is loadable into a data-processing unit and adapted to cause the data-processing unit to carry out the method described above when the computer program is run by the data-processing unit.

Other features and advantages of the method and apparatus disclosed herein will become apparent from the following description of non-limiting embodiments, with reference to the appended drawings.

### BRIEF DESCRIPTION OF THE DRAWINGS

The present invention is illustrated by way of example, and not by way of limitation, in the figures of the accompanying drawings, in which like reference numerals refer to similar elements and in which:
- Figure 1 is a flow chart describing a method for broadcasting data according to an embodiment of the invention;
- Figure 2 is a flow chart describing a method for receiving data according to an embodiment of the invention;
- Figures 3a, 3b and 3c represent examples of decomposition and reconstruction of audio content, associated with different levels of completeness of the data sent, according to several embodiments of the invention;
- Figure 4 represents an example of decomposition and reconstruction of video content in one embodiment of the invention;
- Figure 5 is an example of a transmitting device according to an embodiment of the invention;
- Figure 6 is an example of a receiving device according to an embodiment of the invention.

### DETAILED DESCRIPTION

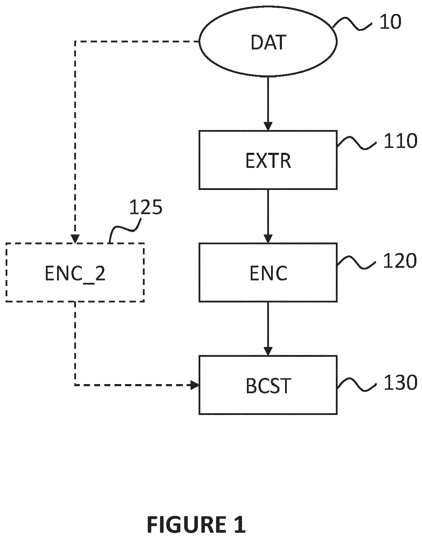

Figure 1 is a flow chart describing a method for broadcasting data according to an embodiment of the invention. The method is performed at a transmitting device (also called broadcast transmitter), for example a radio broadcasting transmitter or a television transmitter.

The method in Figure 1 aims to broadcast data 10. The data 10 may be audio and/or video data. For example, the data 10 may be audio data comprising a text spoken (i.e., read) by a voice with background sound and sound elements (for example musical jingles). According to another example, the data 10 may be video data representing a subject pronouncing a text with a background sound and sound elements with an image or scene in the background.

In a step 110, a set of objects is extracted from the data 10 by using a content extraction method. By "content extraction method", it is meant any method allowing certain elements to be extracted from audio or video content, in particular a text read by an individual. It is understood that the wording "content extraction method" may include a plurality of algorithms, for example an algorithm dedicated to text extraction, an algorithm dedicated to background sound extraction, an algorithm dedicated to face analysis in the image, etc.

In particular, the content extraction method may include one or more AI-based content decomposition algorithms which aim to decompose an audio or video file into a set of objects and metadata, the set of objects comprising non-audio and non-video data, the metadata describing the link between the different objects (and making it possible to recompose the audio or video file from the set of objects). For example, each object of the set of objects may include textual files, descriptive data, timing data, etc. In particular, the set of objects may comprise compressed audio text, synchronization data, background finite element description including voiceprint codes, live scheduler codes, etc.

The advantage of such a decomposition is that the objects are much smaller in size than an audio or video file compressed using traditional coding techniques. Thus, the volume of data to be sent is much lower than if packets corresponding to the audio or video file were directly sent.

Indeed, in recent years, increasingly effective AI-based content decomposition algorithms have emerged, making it possible to efficiently decompose complex content (audio or video content) into simpler objects (non-audio and non-video data). The present invention advantageously exploits the new possibilities - in particular in terms of data compression - offered by such algorithms.

In step 110, the content to be broadcast is thus decomposed into elementary elements (for example voice(s) of several speakers, individual voiceprints, music, metadata, advertisements, jingles, static images, etc.). These elementary elements are called "objects", and are non-audio and non-video data, which represent audio or video content. These objects can be delivered at different times and with different technologies, and used "locally" (i.e. at the receiving device) by combining at least part of these objects to generate content that reproduces the initial content.

The set of objects obtained in step 110 can then be coded according to a conventional coding technique in step 120, to be broadcast (step 130) according to any known broadcasting technique (e.g., 5G Broadcast, DVB T/T2, Satellite broadcasting in formats such as DVB S2/S2X/NIP, DAB+, DRM2).

As described below, the set of objects is then received by a plurality of receiving devices, and each receiving device can then re-assemble the objects to obtain the content. However, not all receiving devices are necessarily configured to implement such assembling.

Therefore, in embodiments, the original data 10 may be encoded at step 125 and then broadcast according to any known broadcasting technique at step 130. Thus, a receiving device which is not configured to implement an assembling of objects can still have access to the content, in a conventional manner.

The set of objects obtained at step 110 may be encoded at step 120 according to a first coding scheme, and the data may be encoded at step 125 according to a second coding scheme. The first coding scheme and the second coding scheme may be the same, or they may be advantageously different. In embodiments, the first coding scheme may have a higher error correction level than the second coding scheme. In these embodiments, the first coding scheme is associated with a protection level higher than the second coding scheme. This makes it possible to limit the number of errors on reception, since the receiving device receives data with a sufficient degree of protection (for example, high redundancy) to reconstruct the content without errors. This is made possible because the data volume is lower than for traditional transmission of multimedia content (audio or video). Indeed, the higher the degree of protection (for example, the higher the redundancy), the more the volume of data to be transmitted increases.

In other words, in these embodiments, the broadcast method of Figure 1 use different modulation and coding techniques concurrently, in a simulcast scheme, with different levels of data protection.

This principle is now illustrated using an example. In this example, the content to be broadcast is audio content. This audio content is coded and modulated according to a conventional modulation and coding scheme of the state of the art. Furthermore, the audio content is decomposed into a plurality of objects using an AI-based content extraction method, and these objects are encoded and modulated according to a modulation and coding scheme associated with higher protection (i.e. associated with smaller coding rate - and therefore with a higher error correction) than the audio content. These two streams are combined and broadcast in simulcast.

In this example, the broadcasting technology may be a 5G broadcasting scheme with a modulation and coding scheme (MODCOD) allowing in normal conditions the delivery of 15 Mbps (Megabits per second) stream to User Equipment (UEs). In special conditions, for example in an emergency, the MODCOD can be increased to gain more than 10 dB at the expense of the total downstream bit rate, which can thus go down for example to 1,5 Mbps.

According to the present invention, it is possible to combine in the same multiplexer 90% of the information (e.g., in 14 Mbps) using "normal" modulation and coding scheme and 10% of the information using much stronger protection (in less than 1 Mbps, e.g. in 100 Kbps). In particular, this 10% can be associated with a much higher redundancy rate, which greatly increases the probability that the corresponding information is correctly received by a receiving device, even if it is in an area of low coverage.

In the 14 Mbps dedicated to "normal" transmission, it is possible to transmit, for example, 120 audio channels at 64 Kbps (which represents approximately 8 Mbps) and 4 audiovisual services at 1.5 Mbps (which represents 6 Mbps). In simulcast, in the remaining 100 Kbps, it is possible to transmit the objects corresponding to the 120 audio channels at approximately 800 bps for each group of objects corresponding to one respective audio channel.

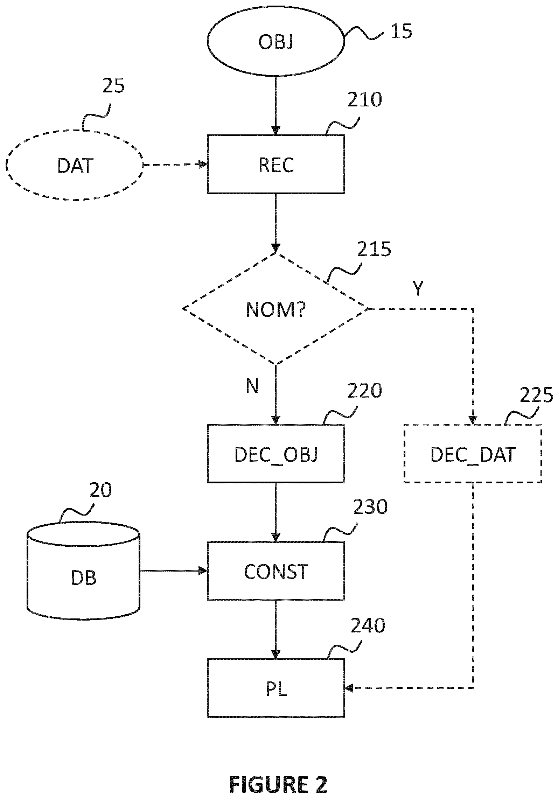

Figure 2 is a flow chart describing a method for receiving data according to an embodiment of the invention. The method of Figure 2 is performed at a receiving device (or "receiver"), for example a User Equipment (UE) such as a smartphone or a tablet.

At a step 210, a set of objects 15 is received by the receiving device. This set of objects 15 is classically a set of encoded objects. Therefore, at a step 220, the set of objects 15 may be decoded using conventional decoding techniques.

At step 230, the set of objects is assembled to obtain the corresponding multimedia (audio or video) content. This assembling (step 230) is performed by using data 20 - called "reconstruction data" - stored in a memory of the receiving device. The reconstruction data comprises at least one among:
- voice data representative of at least one voice (human or synthetic);
- non-voice audio data representative of at least one non-voice audio content (music, sound effect, background noise, etc.); and
- image data representative of at least one image (image of a subject, background image, sequence of images, etc.).

The reconstruction data 20 can be regularly updated when the receiving device is connected to an external server. The external server can indeed store reconstruction data, and the receiving device, when in communication with the external server, can retrieve this data to update the reconstruction data stored in memory.

This reconstruction data 20 stored locally are therefore used to construct the multimedia content from the set of objects 15.

For example, the set of objects 15 received at step 210 may comprise a voice signature. The reconstruction data 20 may include one or more voiceprints making it possible to reproduce one or more associated voices, and each voice may be associated with a respective signature. Therefore, at step 230, the receiving device may determine the voiceprint associated with the voice signature received at step 210 and construct a multimedia content comprising a soundtrack in which the voice associated with the determined voiceprint "reads" textual content. The reconstruction data may also comprise a music file which can be added to the soundtrack. Other examples are presented below.

Referring again to Figure 2, the content constructed in step 230 can then be played at a step 240. For example, if the constructed content is an audio content, it can be played on a speaker of the receiving device. If the constructed content is an audiovisual content, it can be played on a speaker and a display screen of the receiving device.

In embodiments, when both the data and the set objects are simulcast by the transmitting device, the data 25 may also be received by the receiving device at step 210. In these embodiments, it may be verified, at a test 225, if the receiving device is within a nominal reception area. For example, test 225 may be achieved by using an indicator relative to an error rate or to a packet loss rate: if the indicator is lower than or equal to a predefined threshold, the receiving device is within the nominal reception area, and if the indicator is greater than the predefined threshold, the receiving device is outside the nominal reception area. This indicator may be for example a cyclic redundancy check (CRC) value or a Bit Error Rate (BER).

If the receiving device is in the nominal reception area of the broadcast signal, it may decode the received data at step 225 and play the corresponding content at step 240.

If the receiving device is outside the nominal reception area of the broadcast signal, it automatically switches to "object-oriented decoder" mode, and it reconstructs the content from the objects and the reconstruction data, as detailed above (steps 220 and 230). This allows the coverage area of the receiving device to be significantly expanded, both in terms of the actual geographic area covered by the signal and/or indoor penetration. Indeed, even if the device is located in an area with weak reception, it can reconstruct a multimedia content from at least part of the objects received.

It is noted that the test 215 can also relate to the ability of the receiving device to perform such object-oriented decoding. Indeed, such decoding requires a particular configuration of the receiving device, and all the receiving devices for which the broadcast signal is intended are not necessarily configured for this. Therefore, a receiving device which is not configured to perform such object-oriented decoding may automatically perform "standard" decoding (step 225) using a standard reception device of audio or audiovisual streaming.

As explained above, the present invention uses recent IA-based data compression tools to achieve an object-oriented broadcast method, in which the objects are significantly smaller in size than that of classic broadcast methods (object-oriented or not).

It is noted that the present invention allows different granularities in the data broadcast. Indeed, in certain embodiments, the decomposition of the data into a set of objects can be very precise and very complete, so that the information received and reconstructed by the receiving device is as faithful as possible to the original data. In other embodiments, only certain information extracted from the original data can be sent, in order to further reduce the volume of data transmitted.

For example, the content extraction method used in step 110 of Figure 1 may include a speech-to-text (STT) algorithm based on Artificial Intelligence (AI). An STT algorithm is an algorithm that analyzes the voice (typically a human voice, but it can also be a synthetic voice) of audio or video content to transcribe it in the form of a text. More specifically, such algorithms decompose an audio content into a plurality of objects including text streams, live timing patterns/scheduling codes, data identifications for each voice-text stream, etc. Today, very efficient AI-based STT algorithms exist (for example, Whisper or Speechmatics), providing very reliable results in terms of content transcription.

The advantage of moving from audio content to textual content is the size of the data to be sent, which is of course much smaller for text than for conventionally encoded audio or video content. Therefore, the bandwidth needed to transmit text is much lower than the bandwidth needed to transmit audio or video content (generally less than 100 Bps for text versus a few tens of Kbps for audio, and tens to hundreds of Kbps to a few Mbps for video).

This drastic reduction in the volume of data to be sent is accompanied by a simplification of the content, which can be modulated depending on the content extraction method used.

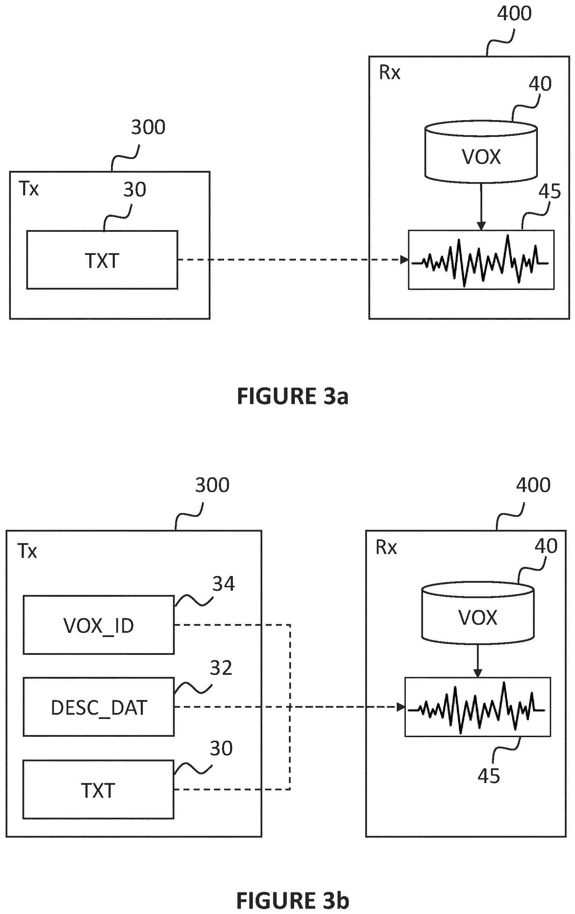

Figures 3a to 3c represent examples of decomposition/transmission and reception/reconstruction of audio content, associated with different levels of completeness of the data sent.

Figure 3a represents the extreme case where only textual content is extracted and broadcast. In this situation, a very low volume of data is sent, thus ensuring that the textual content is received by the greatest number of recipients, even those with very limited connectivity (for example, wireless receiving devices located in indoors, underground, or in areas of network congestion). This case can be interesting in emergency situations, such as a security (e.g. attack) alert or a health hazard alert, for which we want to be certain that the information reaches the recipients, even if only in a basic "purified" form.

Thus, in the example of Figure 3a, the text 30 is extracted from audio content using an AI-based STT algorithm, and broadcast by the transmitting device 300. One receiving device 400 receives the text 30 and constructs an audio content 45 from the text 30 and voice reconstruction data 40 stored in the receiving device 400.

The voice reconstruction data 40 can be, for example, voice data representative of a particular voice (i.e. the voice of a particular subject), e.g. a particular voice footprint. By using such reconstruction data 40, it is therefore possible to construct (simulate) an audio content 45 in which the text is read by the voice generated from the reconstruction data 40 and representative of the particular voice.

The reconstruction data 40 may comprise other data, for example a music, a tune, or any other non-voice audio data. It is then possible to integrate such elements into the audio content 45. The audio content 45 thus obtained is much richer, without requiring more data to be broadcast.

It is noted that broadcasting the textual content by the transmitter device 300 also allows the end user to have access to different language versions of the selected audio content. This can be done by transmitting, by the transmitting device 300, the text in multiple languages, occupying very limited bandwidth, and reproducing locally, at the receiving device 400, the original audio content in the language selected by the user. Alternatively, this can be done sending, by the transmitting device 300, a single textual content (in its original language), and locally translating, at the receiving device 400, the textual content received from the original language into a language selected by the user other than the original language, and constructing audio content in the selected language.

The availability of text is also very useful for providing a written version of the information to end users who need it (for example people with hearing impairment), or more generally for keeping a record of the information delivered.

Such functionalities can also be very useful for subjects traveling to a country where local information is provided in a language they do not understand, particularly in emergency situations where the availability of understandable information is essential.

Other characteristics of the audio content can also be adapted at the receiving device level, to suit the end user, such as speaking speed.

In the example of Figure 3b, in addition to text 30, descriptive data 32 is extracted from the audio content to broadcast. This descriptive data 32 may comprise audio descriptive data describing the audio content, for example synchronization or timing data (which indicates the "rhythm" of the audio content: silences, speed of text, acceleration of speech rate, etc.), volume and intonation data (e.g. example relating to sound volume, more or less loud passages, etc.).

In addition, a "voice signature" 34 identifying a voice associated with the audio content may be extracted. For example, for a radio application, the voices of a plurality of presenters or well-known personalities regularly interviewed (e.g., politicians) can be associated with respective voice signatures (or "voice identifiers") 34.

The voice signature 34 of the audio content to be broadcast can be extracted using a voice processing algorithm.

In the example of Figure 3b, the text 30, the descriptive data 32 and the voice signature 34 are broadcast by the transmitting device 300.

In this example, the receiving device 400 stores, in a memory, a plurality of information making it possible to "recreate" (or "simulate") a plurality of voices, each respectively associated with a voice signature. This plurality of information is a part of the reconstruction data 40 stored at the receiving device 40.

When the receiving device 400 receives the voice signature 34, it retrieves the information associated with this voice signature and construct the audio content 45 based on this information. Therefore, the audio content constructed reproduces the text read by the voice of the presenter of the original audio content.

It is noted that the voice signature 34 may be much simpler, for example indicating whether the presenter is a man or a woman. Conversely, more complex voice data may be used, for example a voiceprint comprising a set of information making it possible to reconstruct, at the receiving device 400, a similar voice, even if no information relating to this voice is stored in the receiving device 400.

By also integrating the descriptive data (synchronization data, intonation data, etc.) 32, it is possible to obtain realistic audio content 45 (the user has the impression that he is hearing the presenter), while the volume of data broadcast remains very low compared to traditional broadcast of audio content. Of course, the more descriptive and precise data is provided the closer the audio content 45 constructed by the receiving device 400 is to the initial audio content.

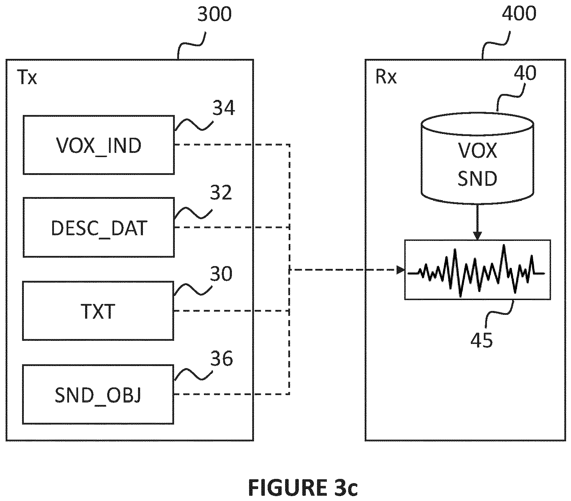

In the example of Figure 3c, in addition to the objects of Figure 3b, at least one non-voice audio object 36 is extracted from the audio data by an audio processing algorithm. This non-voice audio object 36 relates to non-voice audio data of the audio content to be broadcast, for example a music, a tune, a background sound, etc. For example, the non-voice audio object 36 may correspond to an identifier identifying a category of background sound among a plurality of background sounds (e.g., traffic noise, forest noise, seaside noise, etc.). This identifier is broadcast by the transmitting device 300, together with the other objects 30, 32, 34.

The receiving device 400 stores a plurality of background sounds, each associated with a respective identifier. Upon reception of the set of objects, including the background sound identifier 36, the receiving device 400 can add the stored background sound associated with this identifier 36 into the constructed audio content 45.

It is noted that the user may also have the option to deactivate certain components of the content, for example background noise. This is particularly practical for people with hearing impairments for whom it is difficult to understand the main content in the presence of background noise. The content thus played on the receiving device is then less faithful to the initial content, but more adapted to the needs of the user.

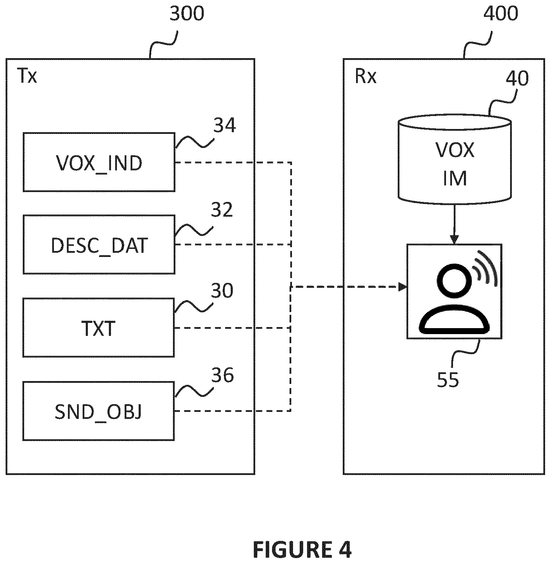

Figure 4 represents an example of decomposition/transmission and reception/reconstruction of video content.

In the example of Figure 4, the description data 32 further comprises data relative to at least one image. For example, the description data 32 may comprise - in addition to the data of Figures 3b and 3c - a subject identifier of a subject speaking on the video content.

In this example, the receiving device 400 may also store, as a part of the reconstruction data 40, a plurality of subject information making it possible to "recreate" (or "simulate") a video of a subject, each subject being respectively associated with a subject identifier. When the receiving device 400 receives the subject identifier from the transmitting device 300, the receiving device 400 retrieves subject information associated with said subject identifier to create a video content representing the subject of the original content. Other information 40 may be used, for example a background image or sequence of images.

The set of objects sent by the transmitting device 300 may also comprise, as in the example of Figure 3b, at least one non-voice audio object 36, at least one voice signature 34 and/or at least one textual content 30. The receiving device 400 may use these objects and information 40 stored in its memory to construct an audio content integrated into the constructed video content.

As it appears from the examples above, the use of new AI-based data compression methods can be advantageously used in content delivery to reach a larger number of receiving devices, including receiving devices located in areas where the connection is very limited. This is made possible by the very small volume of data required to represent complex content such as audio or video content.

To further reduce the volume of data to be sent, it is possible to send only part of the information, in particular indicators or descriptive identifiers which, alone, do not allow the information to be reconstructed, but which, combined with reconstruction data stored at the receiving devices makes it possible to reconstruct content "similar" to the initial content. By "similar", it is understood that certain parts of this content may be simulated parts (for example simulated audio content reproducing text read by a voice associated with a certain identifier).

In addition, the local reconstruction of content within the receiving device allows better adaptation to the needs of the user (for example in terms of languages of delivered audio content, speed of speech, reduction of background noise, etc.).

This local reconstruction also makes it easy to go back in time in order to listen to valuable or essential content again. Indeed, the content of one or more days can be easily stored locally and broadcast when necessary due to the very low volume of content data (thanks to AI compression carried out at the transmitter level).

Storing reconstruction data in the receiving device enables other applications. For example, the receiving device may include an intelligent recommendation engine configured to generate personalized content for each user, including advertising, music, cultural programming, etc.

Also, in embodiments, the receiving device 400 can use artificial intelligence to reconstruct the content at step 230. In particular, the receiving device 400 can use automatic content creation methods to "complete" the content, particularly in the event of loss of certain packets during the broadcast. For example, if certain packets relating to textual content are lost upon reception, the receiving device 400 can automatically generate content to replace the missing content which is most suitable in relation to previous (and possibly subsequent) packets, using for example Large Language Model (LLM) algorithms using a mechanism similar to the one used by ChatGPT or a lighter Small Language Model (SLM) that could more easily run on a Neural Processing Unit (NPU) embedded in the receiver and/or player device.

Other automatic content augmentation techniques can be used. For example, it is possible to automatically generate, at the receiving device, a gesture associated with a received text, and to construct video content in which an avatar or a particular subject says the received text, with a gesture (movements of arm, body, head, etc., but also facial expressions) which corresponds to the spoken text. This makes it possible to generate "realistic" video content of a particular subject, receiving only the text, the voice signature of the subject and optionally an image identifier of the subject (which is not obligatory: for example, image descriptors associated with the individual can be stored at the receiving device in association with their voice signature). Thus, it is possible to provide the user with very rich content (realistic audio or video content) from a very limited volume of objects (therefore using a very limited bandwidth).

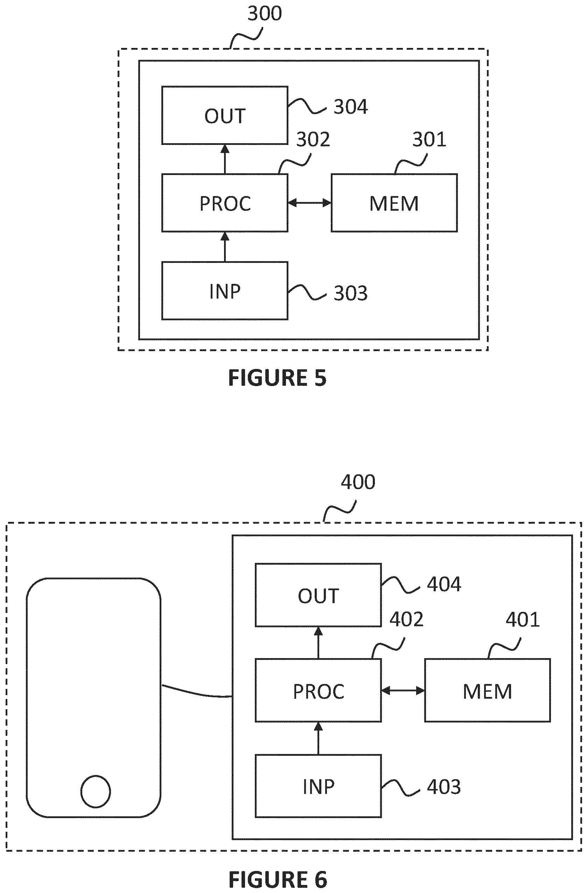

Figure 5 is a possible embodiment for a transmitting device according to an embodiment of the invention.

In this embodiment, the transmitting device 300 comprises a computer, this computer comprising a memory 301 to store program instructions loadable into a circuit and adapted to cause circuit 302 to carry out steps of the method of Figure 1 when the program instructions are run by the circuit 302.

The memory 301 may also store data and useful information for carrying the steps of the present invention as described above.

The circuit 302 may be for instance:
- a processor or a processing unit adapted to interpret instructions in a computer language, the processor or the processing unit may comprise, may be associated with or be attached to a memory comprising the instructions, or
- the association of a processor / processing unit and a memory, the processor or the processing unit adapted to interpret instructions in a computer language, the memory comprising said instructions, or
- an electronic card wherein the steps of the invention are described within silicon, or
- a programmable electronic chip such as a FPGA chip (for « Field-Programmable Gate Array »).

This computer comprises an input interface 303 for the reception of data to be decomposed and broadcast according to the invention and an output interface 304 for providing the set of objects to broadcast.

Figure 6 is a possible embodiment for a receiving device according to an embodiment of the invention.

In this embodiment, the receiving device is a computer, for example a smartphone or tablet, this computer comprising a memory 401 to store program instructions loadable into a circuit and adapted to cause circuit 402 to carry out the steps of the present invention when the program instructions are run by the circuit 402.

The memory 401 may also store reconstruction data and useful information for carrying steps of the present invention as described above (in particular, steps of Figure 2).

The circuit 402 may be for instance:
- a processor or a processing unit adapted to interpret instructions in a computer language, the processor or the processing unit may comprise, may be associated with or be attached to a memory comprising the instructions, or
- the association of a processor / processing unit and a memory, the processor or the processing unit adapted to interpret instructions in a computer language, the memory comprising said instructions, or
- an electronic card wherein the steps of the invention are described within silicon, or
- a programmable electronic chip such as a FPGA chip (for « Field-Programmable Gate Array »).

This computer comprises an input interface 403 for the reception, for example, of the objects according to the invention and an output interface 404 for providing a constructed content.

In the example of Figure 6, the receiving device 400 is a smartphone comprising a touch screen to ease the interaction with a user. In other embodiments, the receiving device 400 may be another device including one or more input devices (such as a mouse or keyboard) and/or one or more output devices (such as a display screen) connected to the circuit 402.

Expressions such as "comprise", "include", "incorporate", "contain", "is" and "have" are to be construed in a non-exclusive manner when interpreting the description and its associated claims, namely construed to allow for other items or components which are not explicitly defined also to be present.

A person skilled in the art will readily appreciate that various parameters disclosed in the description may be modified and that various embodiments disclosed may be combined without departing from the scope of the invention.

It is understood that the invention can be used for any type of network and broadcast technique. For example, the present invention can be used with standards already used such as DVB-S, DVS-S2, DVB-S2X, DVB-NIP, as well as for future direct to device satellite broadcasting standards (e.g. 3GPP non-terrestrial network - NTN - broadcasting standard under development).

In the case of an NTN network, the link budget to the cellular terminal does not allow for very large bit rates. For such network, it is thus possible to send both the original signal with a nominal modulation and channel coding protection and the set of objects with a stronger modulation and channel coding protection, allowing reception with at a much lower signal to noise ratio. In this example, with good propagation conditions the receiving device receives and can use the nominal stream, and under degraded propagation conditions, the receiving device can use the simplified content extracted by Al.

Another case is the one where the satellite (NTN) and terrestrial broadcasting are combined. For example a mobile phone can receive:
- when covered by the terrestrial network, the original data with a nominal bitrate from the terrestrial network (and eventually the set of objects at a reduced bitrate from the NTN satellite when in visibility of the satellite), and
- when outside of the terrestrial cellular coverage, only the set of objects by direct-to-device transmission coming from the satellite and using a reduced bitrate resulting from the AI source coding with a more robust channel coding.

This ensures that in both cases the user receives the set of objects in the event of network disruptions (and therefore can have access to content generated from this set of objects), even if he does not receive the complete original signal.

## Claims

1. A method for broadcasting data, the method being implemented at a transmitting device and comprising:
- extracting a set of objects from the data by using a content extraction method; and
- broadcasting the set of objects by using a broadcasting technique;
wherein the data comprises audio or video data associated with an audio or video content;
wherein the set of objects incompletely represents the audio or video content;
wherein the content extraction method comprises an Artificial Intelligence, AI, -based extraction algorithm.

2. The method of claim 1, wherein the set of objects exclusively comprises non-audio non-video objects.

3. The method of any one of claims 1 to 2, wherein the data comprises audio data including speech data, wherein the AI-based extraction algorithm comprises an AI-based speech-to-text algorithm, and wherein the set of objects comprises at least one text object corresponding to a textual content associated with the speech data and obtained by applying said AI-based speech-to-text algorithm to the audio data.

4. The method of claim 3, wherein the content extraction method further comprises a voice processing algorithm, wherein the set of objects further comprises at least one voice characteristics object corresponding to voice characteristics associated with the speech data and obtained by applying the voice processing algorithm to the audio data.

5. The method of claim 4, wherein the content extraction method further comprises a voice processing algorithm, wherein the at least one voice characteristics object comprises a voice identifier identifying a voice associated with the speech data.

6. The method of any one of claims 3 to 5, wherein the audio data further comprises non-voice audio data, wherein the content extraction method further comprises an audio processing algorithm, wherein the set of objects further comprises at least one audio characteristics object corresponding to audio characteristics associated with the non-voice audio data and obtained by applying the audio processing algorithm to the audio data.

7. The method of any one of the preceding claims, wherein the data comprises image data, wherein the content extraction method further comprises an image processing algorithm, wherein the set of objects further comprises at least one image characteristics object corresponding to image characteristics associated with the image data and obtained by applying the image processing algorithm to the data.

8. The method of any one of the preceding claims, further comprising:
- broadcasting the data simultaneously to the set of objects by using a multiplexing technique.

9. The method of claim 8, further comprising, prior to the simultaneous broadcasting of the set of objects and the data:
- encoding the set of objects according to a first coding scheme;
- encoding the data according to a second coding scheme;
wherein the first coding scheme has a smaller coding rate than the second coding scheme;
wherein the simultaneous broadcasting of the set of objects and the data comprises: simultaneously broadcasting the set of objects encoded according to the first coding scheme and the data encoded according to the second coding scheme.

10. A method for receiving data, the method being implemented at a receiving device comprising a memory storing reconstruction data, the method comprising:
- receiving a set of objects comprising non-audio non-video objects and incompletely representing an audio or video content;
- constructing the audio or video content from the set of objects and the stored reconstruction data; and
- playing the constructed multimedia content.

11. The method of claim 10, wherein the set of objects exclusively comprises non-audio non-video objects.

12. The method of claim 10 or 11, wherein the reconstruction data comprises data representative of at least one voice, non-voice audio data representative of at least one non-voice audio content, or image data representative of at least one image.

13. The method of any one of claims 10 to 12, wherein the set of objects comprises at least one text object corresponding to a textual content, wherein the constructed audio or video content comprises a speech content corresponding to said textual content.

14. The method of claim 13, wherein the reconstruction data comprises a plurality of voice data, each voice data among the plurality of voice data corresponding to a respective voice and being associated with a voice identifier of said respective voice, wherein the set of objects comprises a voice identifier, the method further comprising:
- determining, among the plurality of voice data, voice data respectively associated with the received voice identifier;
wherein the speech content corresponds to the textual content read by a voice corresponding to the determined voice data.

15. The method of any one of claims 13 to 14, wherein the reconstruction data comprises a plurality of non-voice audio data corresponding to a respective plurality of background sounds, each background sound among the plurality of background sounds being associated with a respective background sound identifier, wherein the set of objects comprises a background sound identifier, the method further comprising:
- determining, among the plurality of background sounds, a background sound respectively associated with the received background sound identifier;
wherein the audio or video content comprises an audio content in which the textual content is read with the determined background sound.

16. The method of any one of claims 13 to 15, wherein the reconstruction data comprises image data, each image data being associated with a respective image identifier, wherein the set of objects comprises an image identifier, the method further comprising:
- determining at least one image data respectively associated with the received image identifier;
wherein the audio or video content comprises a video content including:
- an audio content in which said textual content is read; and
- an image content constructed from the at least one image data determined.

17. The method of claim 16, wherein the image data comprises descriptive data representative of a plurality of subjects, wherein the image identifier is a subject identifier identifying a subject among the plurality of subjects, wherein the image content comprises a sequence of images of the subject associated with the received subject identifier.

18. A transmitting device configured to implement a method according to any one of claims 1 to 9.

19. A receiving device configured to implement a method according to any one of claims 10 to 17.

20. A non-transitory computer readable storage medium, having stored thereon a computer program comprising program instructions, the computer program being loadable into a data-processing unit and adapted to cause the data-processing unit to carry out the steps of any of claims 1 to 17 when the computer program is run by the data-processing device.
